# EUROPEAN PATENT APPLICATION

(11) **EP 3 364 310 A1**
(43) Date of publication of application: **22.08.2018**
(21) Application number: 16867928.0
(22) Date of filing: 18.11.2016
(51) Int. Cl.: G06F 17/30

(54) **DATA PROCESSING METHOD AND DEVICE**

(30) Priority: 24.11.2015 CN 201510828383
(71) Applicant: Huawei Technologies Co., Ltd., Longgang District Shenzhen, Guangdong 518129 (CN)
(72) Inventor: XIONG, Gang, Shenzhen Guangdong 518129 (CN); PENG, Yongfei, Shenzhen Guangdong 518129 (CN)
(74) Representative: Isarpatent
(86) International application number: PCT/CN2016/106391
(87) International publication number: WO 2017/088705

(57) **Abstract**

Embodiments of the present invention provide a data processing method and apparatus. The data processing apparatus in the present invention includes: a first hash module, at least one second hash module, and a block data scanner module, where the first hash module includes multiple slots, and each slot is in a one-to-one correspondence with each data partition or is in a one-to-one correspondence with each data set; each of the at least one second hash module is associated with one slot in the first hash module, and the second hash module is configured to store location information of service data in a data partition corresponding to an associated slot and that is in a storage engine or location information of service data in a data set of a subscription relationship and that is in a storage engine. By means of the data processing apparatus in the present invention, when service data in a data set of a subscription relationship or a data partition needs to be synchronized to another node, all service data in the data set of the corresponding subscription relationship or the corresponding data partition can be quickly synchronized to the another node, and processing efficiency is high.

## Description

### TECHNICAL FIELD

Embodiments of the present invention relate to computer technologies, and in particular, to a data processing method and apparatus.

### BACKGROUND

A distributed database is a logically unified database that is formed by connecting multiple physically dispersed data storage units by using a high-speed computer network. A basic idea of the distributed database is to dispersedly store, in multiple data storage nodes that are connected by using a network, data that is in an original centralized database, so as to obtain a larger storage capacity and more concurrent access. In recent years, with a rapid growth of a data volume, a distributed database technology develops rapidly.

Generally, there are the following three service application scenarios in the distributed database: (1) Data needs to be distributed in multiple data nodes according to a specific distribution policy, and data is migrated to another node in a specific set manner if a system is scalable. (2) Multiple copies are redundant. Data is backed up to improve reliability of a database system. In a backup process, a new copy is synchronized to a corresponding node by using a specific synchronization policy. (3) A local fast buffer storage area is applied and deployed in a database client, and the distributed database needs to have a subscription push capability, that is, a database server can push data to an application node according to a data characteristic. In all these application scenarios, service data that meets a specific condition needs to be synchronized to another node, and the node may be a data node inside a distributed system, such as a database server (DB Server), or may be a data consumer such as a database client (DB Client).

However, because data in a storage engine and a distribution policy of the data are independent from each other, all service data in the storage engine needs to be scanned when service data that meets a specific condition (a partition or a subscription relationship) needs to be synchronized to another node, and consequently, processing efficiency is low. Especially, when a data volume in the storage engine is extremely large, a data node needs to spend a relatively long time in synchronizing service data that meets a specific condition to another node.

### SUMMARY

Embodiments of the present invention provide a data processing method and apparatus, so as to efficiently reduce a time that needs to be spent in synchronizing, as required, service data that meets a specific condition to another node.

According to a first aspect, an embodiment of the present invention provides a data processing apparatus, where the data processing apparatus is applied to a data node in a distributed database system, and includes a first hash module, at least one second hash module, and a block data scanner module, where
the first hash module includes multiple slots, and each slot is in a one-to-one correspondence with each data partition or is in a one-to-one correspondence with each data set;
each of the at least one second hash module is associated with one slot in the first hash module, and the second hash module is configured to store location information of service data in a data partition corresponding to an associated slot and that is in a storage engine or location information of service data in a data set of a subscription relationship and that is in a storage engine; and
the block data scanner module is configured to: perform, according to a slot in the first hash module, scanning in a second hash module corresponding to the slot, obtain location information of service data and that is in the storage engine, and extract the service data from the storage engine according to the location information.

With reference to the first aspect, in a first possible implementation of the first aspect, when the data node is started, the first hash module is further configured to perform, according to a distribution policy or a subscription relationship, an initialization operation on a slot in the first hash module and an association relationship between the slot and the second hash module.

With reference to the first possible implementation of the first aspect, in a second possible implementation of the first aspect, the distribution policy includes at least one partition identifier of the node and a mapping function between a characteristic value of service data and a partition identifier, where
that the first hash module is further configured to perform, according to a distribution policy, an initialization operation on a slot in the first hash module and an association relationship between the slot and the second hash module specifically includes:
the first hash module is further configured to: establish a one-to-one correspondence between each partition identifier and each slot in the first hash module, obtain, according to a characteristic value of service data and the mapping function between a characteristic value of service data and a partition identifier, a partition identifier corresponding to the service data, and store, in a second hash module associated with a slot corresponding to the partition identifier, location information of the service data and that is in the storage engine.

With reference to the second possible implementation of the first aspect, in a third possible implementation of the first aspect, if newly-added service data needs to be stored in the data node, the newly-added service data is stored in the storage engine of the data node, and the first hash module is further configured to calculate, according to a characteristic value of the newly-added service data and the mapping function, a partition identifier corresponding to the newly-added service data, and store, in a second hash module associated with the partition identifier corresponding to the newly-added service data, location information of the newly-added service data and that is in the storage engine.

With reference to the second possible implementation of the first aspect, in a fourth possible implementation of the first aspect, if service data in the data node needs to be deleted, the service data in the storage engine is deleted, and the first hash module is further configured to calculate, according to a characteristic value of the service data and the mapping function, a partition identifier corresponding to the service data, and delete location information of the service data in a second hash module associated with the partition identifier corresponding to the service data and that is in the storage engine.

With reference to the first possible implementation of the first aspect, in a fifth possible implementation of the first aspect, when the data node is started, the subscription relationship includes information about at least one data set that meets a preset condition; and
that the first hash module is further configured to perform, according to a subscription relationship, an initialization operation on a slot in the first hash module and an association relationship between the slot and the second hash module specifically includes:
the first hash module is further configured to establish a one-to-one correspondence between information about each data set that meets the preset condition and a slot in the first hash module, and store, in a second hash module associated with information about a data set that meets the preset condition, location information of service data that meets the preset condition.

With reference to the fifth possible implementation of the first aspect, in a sixth possible implementation of the first aspect, if newly-added service data needs to be stored in the data node, the newly-added service data is stored in the storage engine of the data node, and the first hash module is further configured to obtain, according to a characteristic value of the newly-added service data, information about a data set that meets the preset condition and to which the newly-added service data belongs, and store, in a second hash module associated with the information about the data set that meets the preset condition, location information of the newly-added service data and that is in the storage engine.

With reference to the fifth possible implementation of the first aspect, in a seventh possible implementation of the first aspect, if service data in the data node needs to be deleted, the service data in the storage engine is deleted, and the first hash module is further configured to obtain, according to a characteristic value of the service data, information about a data set that meets the preset condition and to which the service data belongs, and delete information about a location that is in the storage engine and that is of the service data in a second hash module associated with the information about the data set that meets the preset condition and to which the service data belongs.

According to a second aspect, an embodiment of the present invention provides a method for processing data by the data processing apparatus according to any one of the first aspect or the first to the seventh possible implementations of the first aspect, including:
obtaining, by the data processing apparatus of a destination data node, a to-be-processed data partition, and establishing a correspondence between a slot in a first hash module and the to-be-processed data partition;
creating, by the data processing apparatus of the destination data node, a new second hash module, and associating the new second hash module with the slot in the first hash module;
receiving, by the data processing apparatus of the destination data node, service data that is in the to-be-processed data partition and that is sent by a source data node; and
storing, in a storage engine of the destination data node by the data processing apparatus of the destination data node, the service data in the to-be-processed data partition, and storing, in the new second hash module, location information of the service data in the to-be-processed data partition and that is in the storage engine, where
the to-be-processed data partition includes a to-be-migrated data partition and a to-be-backed-up data partition.

According to a third aspect, an embodiment of the present invention provides a method for processing data by the data processing apparatus according to any one of the first aspect or the first to the seventh possible implementations of the first aspect, including:
obtaining, by the data processing apparatus of a source data node, a to-be-processed data partition, and obtaining, according to the to-be-processed partition, a slot that is in a first hash module and that is corresponding to the to-be-processed partition;
obtaining, by the data processing apparatus of the source data node by using a block data scanner module, each piece of location information in a second hash module associated with the slot corresponding to the to-be-processed data partition, and extracting, from a storage engine, service data corresponding to each piece of location information; and
sending, by the data processing apparatus of the source data node, the service data to a destination data node, where
the to-be-processed data partition includes a to-be-migrated data partition and a to-be-backed-up data partition.

With reference to the third aspect, in a first possible implementation of the third aspect, if the to-be-processed data partition is a to-be-migrated data partition, the method further includes:
deleting, by the data processing apparatus of the source data node, service data that is in the to-be-migrated data partition and that is in the storage engine, and deleting each piece of location information in the second hash module associated with the slot corresponding to the to-be-migrated data partition.

According to a fourth aspect, an embodiment of the present invention provides a method for processing data by the data processing apparatus according to any one of the first aspect or the first to the seventh possible implementations of the first aspect, including:
obtaining, by the data processing apparatus of a source data node, a slot that is in a first hash module and that is corresponding to a subscription relationship, and obtaining a second hash module associated with the slot in the first hash module;
obtaining, by the data processing apparatus of the source data node by using a block data scanner module, each piece of location information in the second hash module associated with the slot corresponding to the subscription relationship, and extracting, from a storage engine, service data corresponding to each piece of location information; and
sending, by the source data node, the service data to a data usage device.

According to the data processing method and apparatus in the embodiments of the present invention, the data processing apparatus in the embodiments is applied to each data node in a distributed database system. Service data may be mapped in a storage engine by using a first hash module and a second hash module. When service data in a data set of a subscription relationship or a data partition needs to be obtained, there is no need to scan the service data one by one in the storage engine. Location information of service data in the data set of the corresponding subscription relationship or the corresponding data partition and that is in the storage engine can be quickly obtained according to the first hash module and the second hash module, and the corresponding service data can be quickly obtained from the storage engine. Therefore, when service data in a data set of a subscription relationship or a data partition needs to be synchronized to another node, all service data in the data set of the corresponding subscription relationship or the corresponding data partition can be quickly synchronized to the another node, and processing efficiency is high.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a schematic diagram of Embodiment 1 of a data processing apparatus according to the present invention;
FIG. 2 is a schematic diagram of performing initialization by a data processing apparatus according to a distribution policy according to the present invention;
FIG. 3 is a flowchart of a method for sending data by a block data scanner of a data processing apparatus according to the present invention;
FIG. 4 is a flowchart of Embodiment 1 of a method for processing data by a data processing apparatus according to the present invention;
FIG. 5 is a flowchart of Embodiment 2 of a method for processing data by a data processing apparatus according to the present invention; and
FIG. 6 is a flowchart of Embodiment 3 of a method for processing data by a data processing apparatus according to the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

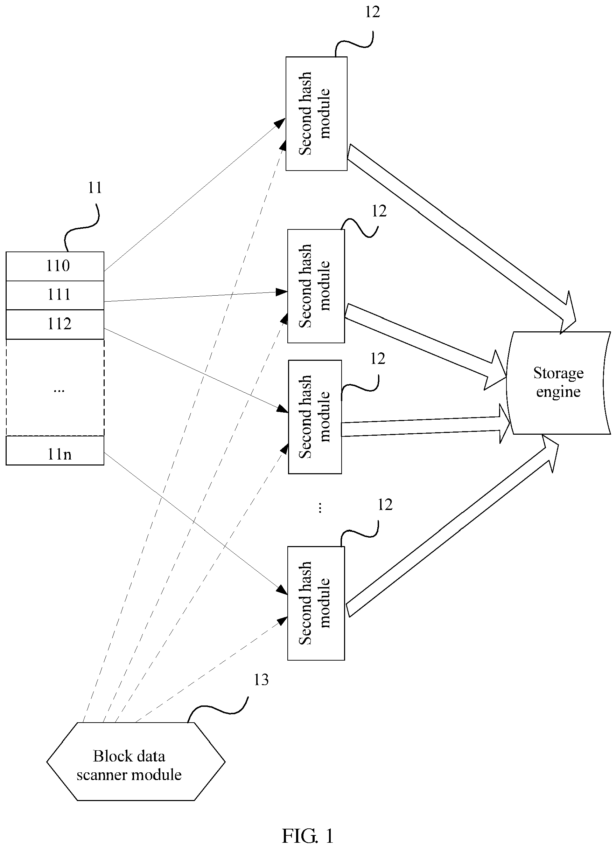

FIG. 1 is a schematic diagram of Embodiment 1 of a data processing apparatus according to the present invention. The data processing apparatus is applied to data nodes in a distributed database system. As shown in FIG. 1, the data processing apparatus in this embodiment may include a first hash module 11, at least one second hash module 12, and a block data scanner module 13.

The first hash module 11 includes multiple slots (111-11n), and each slot is in a one-to-one correspondence with each data partition or is in a one-to-one correspondence with a data set of each subscription relationship. A quantity of slots in the first hash module is related to a largest quantity of partitions that can be accommodated by a system.

Each of the at least one second hash module 12 is associated with one slot in the first hash module, and the second hash module is configured to store location information of service data in a data partition corresponding to an associated slot and that is in a storage engine or location information of service data in a data set of a subscription relationship and that is in a storage engine. Specifically, the location information may be a row ID that is of service data in the distributed database and that is in the storage engine.

The block data scanner module 13 is configured to: perform, according to a slot in the first hash module, scanning in a second hash module corresponding to the slot, obtain location information of service data and that is in the storage engine, and extract the service data from the storage engine according to the location information.

Further, when the data node is started, the first hash module is further configured to perform, according to a distribution policy or a subscription relationship, an initialization operation on a slot in the first hash module and an association relationship between the slot and the second hash module. The following describes in detail a specific implementation process of performing an initialization operation separately according to the distribution policy and the subscription relationship.

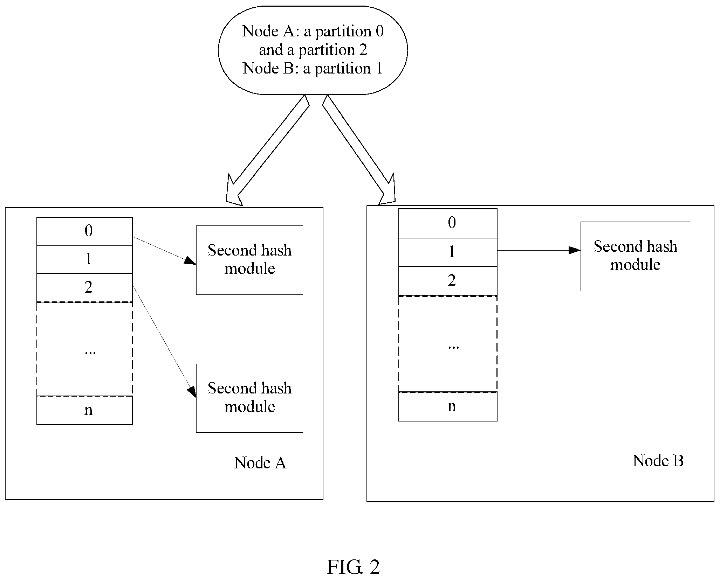

In a possible implementation, the distribution policy includes at least one partition identifier of the node and a mapping function between a characteristic value of service data and a partition identifier, and the distribution policy may be generated by a control node. FIG. 2 is a schematic diagram of performing initialization by a data processing apparatus according to a distribution policy according to the present invention. As shown in FIG. 2, a node A and a node B are used as an example, and specific content of the distribution policy may be as follows: The node A is corresponding to a partition 0 and a partition 2, and the node B is corresponding to a partition 1. The control node may send the distribution policy to the node A and the node B. A data processing apparatus of the node A and a data processing apparatus of the node B perform an initialization operation according to the distribution policy. That is, a slot in a first hash module in the node A is corresponding to the partition 0, and associates the slot with a second hash module; another slot is corresponding to the partition 2, and associates the slot with another second hash module. A slot in a first hash module in the node B is corresponding to the partition 1, and associates the slot with a second hash module.

That the data processing apparatus performs, according to a distribution policy, an initialization operation on a slot in the first hash module and an association relationship between the slot and the second hash module may be specifically as follows: The first hash module is further configured to: establish a one-to-one correspondence between each partition identifier and each slot in the first hash module, obtain, according to a characteristic value of service data and the mapping function between a characteristic value of service data and a partition identifier, a partition identifier corresponding to the service data, and store, in a second hash module associated with a slot corresponding to the partition identifier, location information of the service data and that is in the storage engine.

The foregoing example is further described by using an example. That is, the partition identifier corresponding to the service data is obtained according to the mapping function of the distribution policy and the characteristic value of the service data. If a partition identifier that is corresponding to service data and that is obtained according to the mapping function is 0, location information of the service data and that is in the storage engine is stored in the second hash module associated with the partition 0.

Optionally, if newly-added service data needs to be stored in the data node, the newly-added service data is stored in the storage engine of the data node, and the first hash module is further configured to calculate, according to a characteristic value of the newly-added service data and the mapping function, a partition identifier corresponding to the newly-added service data, and store, in a second hash module associated with the partition identifier corresponding to the newly-added service data, location information of the newly-added service data and that is in the storage engine.

Optionally, if service data in the data node needs to be deleted, the service data in the storage engine is deleted, and the first hash module is further configured to calculate, according to a characteristic value of the service data and the mapping function, a partition identifier corresponding to the service data, and delete location information of the service data in a second hash module associated with the partition identifier corresponding to the service data and that is in the storage engine.

In another possible implementation, when the data node is started, the subscription relationship includes information about at least one data set that meets a preset condition.

That the data processing apparatus performs, according to a subscription relationship, an initialization operation on a slot in the first hash module and an association relationship between the slot and the second hash module may be specifically as follows: The first hash module is further configured to establish a one-to-one correspondence between information about each data set that meets the preset condition and a slot in the first hash module, and store, in a second hash module associated with information about a data set that meets the preset condition, location information of service data that meets the preset condition.

Optionally, if newly-added service data needs to be stored in the data node, the newly-added service data is stored in the storage engine of the data node, and the first hash module is further configured to obtain, according to a characteristic value of the newly-added service data, information about a data set that meets the preset condition and to which the newly-added service data belongs, and store, in a second hash module associated with the information about the data set that meets the preset condition, information about a location that is of the newly-added service data and that is in the storage engine.

Optionally, if service data in the data node needs to be deleted, the service data in the storage engine is deleted, and the first hash module is further configured to obtain, according to a characteristic value of the service data, information about a data set that meets the preset condition and to which the service data belongs, and delete location information in the storage engine and that is of the service data in a second hash module associated with the information about the data set that meets the preset condition and to which the service data belongs.

Because the location information of the service data is fully hashed in the second hash module, in the foregoing process of inserting and deleting service data, costs are relatively small, and an insertion operation and a deletion operation can be completed quickly.

The data processing apparatus in this embodiment is applied to a data node in a distributed database system. Service data may be mapped in a storage engine by using a first hash module and a second hash module. When service data in a data set of a subscription relationship or a data partition needs to be obtained, there is no need to scan the service data one by one in the storage engine. Location information of service data in the data set of the corresponding subscription relationship or the corresponding data partition and that is in the storage engine can be quickly obtained according to the first hash module and the second hash module, and the corresponding service data can be quickly obtained from the storage engine. Therefore, when service data in a data set of a subscription relationship or a data partition needs to be synchronized to another node, all service data in the data set of the corresponding subscription relationship or the corresponding data partition can be quickly synchronized to the another node, and processing efficiency is high.

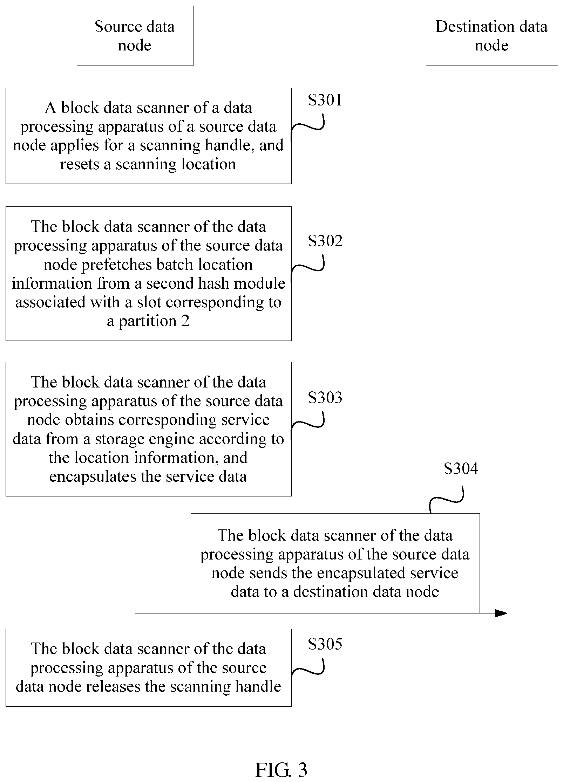

FIG. 3 is a flowchart of a method for sending data by a block data scanner of a data processing apparatus according to the present invention. In this embodiment, an example in which a data processing apparatus of a source data node sends service data in a partition 2 to a destination data node is used for description. As shown in FIG. 3, the method in this embodiment may include the following steps:
S301. A block data scanner of the data processing apparatus of the source data node applies for a scanning handle, and resets a scanning location.
S302. The block data scanner of the data processing apparatus of the source data node prefetches batch location information from a second hash module associated with a slot corresponding to the partition 2.
S303. The block data scanner of the data processing apparatus of the source data node obtains corresponding service data from a storage engine according to the location information, and encapsulates the service data.
S304. The block data scanner of the data processing apparatus of the source data node sends the encapsulated service data to the destination data node.
S305. The block data scanner of the data processing apparatus of the source data node releases the scanning handle.

It may be understood that before S305, the method may further include: receiving an acknowledgement (ACK) message sent by the destination data node.

A block data scanner module of a data processing apparatus in this embodiment obtains location information by performing batch scanning in a second hash module, and extracts batch service data in a storage engine according to the location information, so that without performing data matching, service data is obtained efficiently and is sent to a destination data node.

That the data processing apparatus in the embodiment is applied to a data node to implement data migration, copy replication, and subscription push is explained by using the following several specific embodiments.

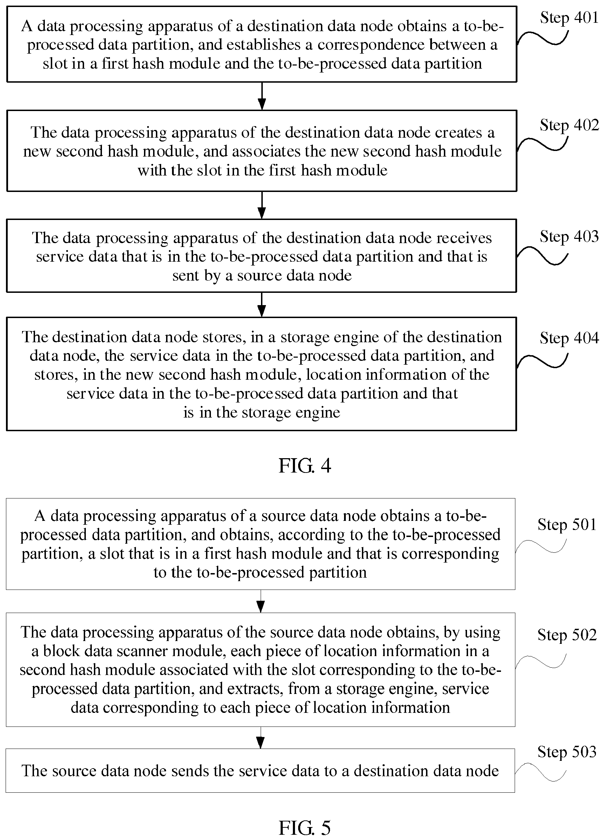

FIG. 4 is a flowchart of Embodiment 1 of a method for processing data by a data processing apparatus according to the present invention. This embodiment is executed by a data processing apparatus of a destination data node. As shown in FIG. 4, the method in this embodiment may include the following steps:
Step 401: The data processing apparatus of the destination data node obtains a to-be-processed data partition, and establishes a correspondence between a slot in a first hash module and the to-be-processed data partition.

The to-be-processed data partition is a data partition that needs to be migrated from a source data node to the destination data node.

Step 402: The data processing apparatus of the destination data node creates a new second hash module, and associates the new second hash module with the slot in the first hash module.

Step 403: The data processing apparatus of the destination data node receives service data that is in the to-be-processed data partition and that is sent by a source data node.

Step 404: The destination data node stores, in a storage engine of the destination data node, the service data in the to-be-processed data partition, and stores, in the new second hash module, location information of the service data in the to-be-processed data partition and that is in the storage engine.

The to-be-processed data partition includes a to-be-migrated data partition and a to-be-backed-up data partition. That is, correspondingly, data processing includes data migration and copy replication.

In a process of implementing data migration or copy replication in this embodiment, a data processing apparatus of a destination data node creates a new second hash module, stores received service data in a storage engine, and stores, in the second hash module, location information of the service data and that is in the storage engine. Therefore, migration or copy replication may be performed independently in partitions. An operation only needs to be performed on a slot in a first hash module and the second hash module without extra calculation, and data migration and copy replication can be completed relatively efficiently without relying on a particular storage engine.

FIG. 5 is a flowchart of Embodiment 2 of a method for processing data by a data processing apparatus according to the present invention. This embodiment is executed by a data processing apparatus of a source data node. As shown in FIG. 5, the method in this embodiment may include the following steps:
Step 501: The data processing apparatus of the source data node obtains a to-be-processed data partition, and obtains, according to the to-be-processed partition, a slot that is in a first hash module and that is corresponding to the to-be-processed partition.
Step 502: The data processing apparatus of the source data node obtains, by using a block data scanner module, each piece of location information in a second hash module associated with the slot corresponding to the to-be-processed data partition, and extracts, from a storage engine, service data corresponding to each piece of location information.
Step 503: The source data node sends the service data to a destination data node.

The to-be-processed data partition includes a to-be-migrated data partition and a to-be-backed-up data partition.

Further, if the to-be-processed data partition is a to-be-migrated data partition, the data processing apparatus of the source data node deletes service data that is in the to-be-migrated data partition and that is in the storage engine, and deletes each piece of location information in the second hash module associated with the slot corresponding to the to-be-migrated data partition.

That is, when performing data migration, the data processing apparatus of the source data node needs to delete information about the migrated data partition from the first hash module and the second hash module.

In a process of implementing data migration or copy replication in this embodiment, a data processing apparatus of a source data node obtains a slot that is in a first hash module and that is corresponding to the to-be-processed partition, obtains, by using a block data scanner module, each piece of location information in a second hash module associated with the slot corresponding to the to-be-processed data partition, extracts, from a storage engine, service data corresponding to each piece of location information, and sends the service data to a destination data node in batches, so that migration or copy replication may be performed independently in partitions, and data migration and copy replication can be completed relatively efficiently without performing data matching.

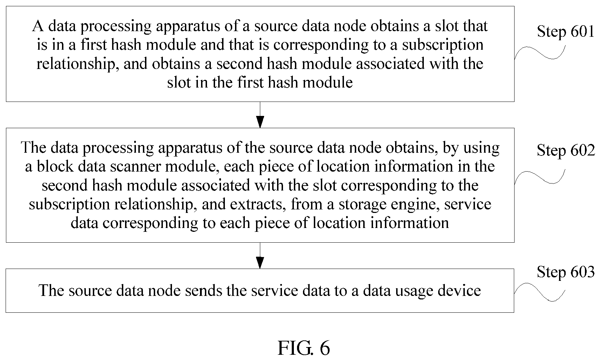

FIG. 6 is a flowchart of Embodiment 3 of a method for processing data by a data processing apparatus according to the present invention. This embodiment is executed by a data processing apparatus of a source data node. As shown in FIG. 6, the method in this embodiment may include the following steps:
Step 601: The data processing apparatus of the source data node obtains a slot that is in a first hash module and that is corresponding to a subscription relationship, and obtains a second hash module associated with the slot in the first hash module.
Step 602: The data processing apparatus of the source data node obtains, by using a block data scanner module, each piece of location information in the second hash module associated with the slot corresponding to the subscription relationship, and extracts, from a storage engine, service data corresponding to each piece of location information.
Step 603: The source data node sends the service data to a data usage device.

In a process of implementing subscription push in this embodiment, a data processing apparatus of a source data node obtains a slot that is in a first hash module and that is corresponding to a subscription relationship, obtains a second hash module associated with the slot in the first hash module, obtains, by using a block data scanner module, each piece of location information in the second hash module associated with the slot corresponding to the subscription relationship, extracts, from a storage engine, service data corresponding to each piece of location information, and sends the service data to a data consumer. In this embodiment, all service data that meets the subscription relationship can be sent to the corresponding data consumer, so that efficient subscription push is implemented.

It should be noted that by means of explanation of the foregoing embodiments, the data processing apparatus in the embodiments of the present invention performs corresponding mapping on service data in a storage engine in a database. Therefore, a data mapping manner that does not rely on a particular database and is not in strong correlation with a particular data distribution policy is generated, so that all data nodes in a distributed database system can support data migration, copy replication, and push of data of various subscription relationships in a case of scale out, scale in, or a fault of the distributed database system, and have relatively high data processing efficiency.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A data processing apparatus, wherein the data processing apparatus is applied to a data node in a distributed database system, and comprises a first hash module, at least one second hash module, and a block data scanner module, wherein
the first hash module comprises multiple slots, and each slot is in a one-to-one correspondence with each data partition or is in a one-to-one correspondence with a data set of each subscription relationship;
each of the at least one second hash module is associated with one slot in the first hash module, and the second hash module is configured to store location information of service data in a data partition corresponding to an associated slot and that is in a storage engine or location information that is of service data in a data set of a subscription relationship and that is in a storage engine; and
the block data scanner module is configured to: perform, according to a slot in the first hash module, scanning in a second hash module corresponding to the slot, obtain location information of service data in the storage engine, and extract the service data from the storage engine according to the location information.

2. The data processing apparatus according to claim 1, wherein when the data node is started, the first hash module is further configured to perform, according to a distribution policy or a subscription relationship, an initialization operation on a slot in the first hash module and an association relationship between the slot and the second hash module.

3. The data processing apparatus according to claim 2, wherein the distribution policy comprises at least one partition identifier of the node and a mapping function between a characteristic value of service data and a partition identifier, wherein
that the first hash module is further configured to perform, according to a distribution policy, an initialization operation on a slot in the first hash module and an association relationship between the slot and the second hash module specifically comprises:
the first hash module is further configured to: establish a one-to-one correspondence between each partition identifier and each slot in the first hash module, obtain, according to a characteristic value of service data and the mapping function between a characteristic value of service data and a partition identifier, a partition identifier corresponding to the service data, and store, in a second hash module associated with a slot corresponding to the partition identifier, location information of the service data in the storage engine.

4. The data processing apparatus according to claim 3, wherein if newly-added service data needs to be stored in the data node, the newly-added service data is stored in the storage engine of the data node, and the first hash module is further configured to calculate, according to a characteristic value of the newly-added service data and the mapping function, a partition identifier corresponding to the newly-added service data, and store, in a second hash module associated with the partition identifier corresponding to the newly-added service data, location information of the newly-added service data is in the storage engine.

5. The data processing apparatus according to claim 3, wherein if service data in the data node needs to be deleted, the service data in the storage engine is deleted, and the first hash module is further configured to calculate, according to a characteristic value of the service data and the mapping function, a partition identifier corresponding to the service data, and delete location information of the service data in a second hash module associated with the partition identifier corresponding to the service data and that is in the storage engine.

6. The data processing apparatus according to claim 2, wherein when the data node is started, the subscription relationship comprises information about at least one data set that meets a preset condition; and
that the first hash module is further configured to perform, according to a subscription relationship, an initialization operation on a slot in the first hash module and an association relationship between the slot and the second hash module specifically comprises:
the first hash module is further configured to establish a one-to-one correspondence between information about each data set that meets the preset condition and a slot in the first hash module, and store, in a second hash module associated with information about a data set that meets the preset condition, location information of service data that meets the preset condition.

7. The data processing apparatus according to claim 6, wherein if newly-added service data needs to be stored in the data node, the newly-added service data is stored in the storage engine of the data node, and the first hash module is further configured to obtain, according to a characteristic value of the newly-added service data, information about a data set that meets the preset condition and to which the newly-added service data belongs, and store, in a second hash module associated with the information about the data set that meets the preset condition, location information of the newly-added service data and that is in the storage engine.

8. The data processing apparatus according to claim 6, wherein if service data in the data node needs to be deleted, the service data in the storage engine is deleted, and the first hash module is further configured to obtain, according to a characteristic value of the service data, information about a data set that meets the preset condition and to which the service data belongs, and delete location information that is in the storage engine and that is of the service data in a second hash module associated with the information about the data set that meets the preset condition and to which the service data belongs.

9. A method for processing data by the data processing apparatus according to any one of claims 1 to 8, comprising:
obtaining, by the data processing apparatus of a destination data node, a to-be-processed data partition, and establishing a correspondence between a slot in a first hash module and the to-be-processed data partition;
creating, by the data processing apparatus of the destination data node, a new second hash module, and associating the new second hash module with the slot in the first hash module;
receiving, by the data processing apparatus of the destination data node, service data that is in the to-be-processed data partition and that is sent by a source data node; and
storing, in a storage engine of the destination data node by the data processing apparatus of the destination data node, the service data in the to-be-processed data partition, and storing, in the new second hash module, location information of the service data in the to-be-processed data partition and that is in the storage engine, wherein
the to-be-processed data partition comprises a to-be-migrated data partition and a to-be-backed-up data partition.

10. A method for processing data by the data processing apparatus according to any one of claims 1 to 8, comprising:
obtaining, by the data processing apparatus of a source data node, a to-be-processed data partition, and obtaining, according to the to-be-processed partition, a slot that is in a first hash module and that is corresponding to the to-be-processed partition;
obtaining, by the data processing apparatus of the source data node by using a block data scanner module, each piece of location information in a second hash module associated with the slot corresponding to the to-be-processed data partition, and extracting, from a storage engine, service data corresponding to each piece of location information; and
sending, by the data processing apparatus of the source data node, the service data to a destination data node, wherein
the to-be-processed data partition comprises a to-be-migrated data partition and a to-be-backed-up data partition.

11. The method according to claim 10, wherein if the to-be-processed data partition is a to-be-migrated data partition, the method further comprises:
deleting, by the data processing apparatus of the source data node, service data that is in the to-be-migrated data partition and that is in the storage engine, and deleting each piece of location information in the second hash module associated with the slot corresponding to the to-be-migrated data partition.

12. A method for processing data by the data processing apparatus according to any one of claims 1 to 8, comprising:
obtaining, by the data processing apparatus of a source data node, a slot that is in a first hash module and that is corresponding to a subscription relationship, and obtaining a second hash module associated with the slot in the first hash module;
obtaining, by the data processing apparatus of the source data node by using a block data scanner module, each piece of location information in the second hash module associated with the slot corresponding to the subscription relationship, and extracting, from a storage engine, service data corresponding to each piece of location information; and
sending, by the source data node, the service data to a data usage device.
